Europäisches Patentamt

European Patent Office

Office européen des brevets

(19)

(11) Veröffentlichungsnummer: **0 091 061**

A2

## EUROPÄISCHE PATENTANMELDUNG

(21) Anmeldenummer: 83103071.3

(22) Anmeldetag: 28.03.83

(51) Int. Cl.³: **H 04 J 3/06**

(30) Priorität: 02.04.82 DE 3212450

(43) Veröffentlichungstag der Anmeldung:
12.10.83 Patentblatt 83/41

(84) Benannte Vertragsstaaten:
AT CH DE FR IT LI

(71) Anmelder: SIEMENS AKTIENGESELLSCHAFT
Berlin und München Wittelsbacherplatz 2
D-8000 München 2(DE)

(72) Erfinder: Pospischil, Reginhard, Dr.-Ing.
Gabriel-von-Seidl-Strasse 15
D-8032 Lochham(DE)

(72) Erfinder: Magerl, Johann, Ing.grad.
Sauerbruchstrasse 9
D-8000 München 70(DE)

(54) Synchronisiereinrichtung einer Digitalsignal- Demultiplexeinrichtung.

(57) Synchronisiereinrichtung für eine Digitalsignal-Demultiplexeinrichtung mit einer Erkennungsschaltung (3) zur Identifizierung eines Rahmenkennungswortes, mit einer Synchronisierung (4) zur Überwachung und Steuerung der Phasenlage eines Demultiplexers (22) und eines Taktgenerators (6), bei der ein zusätzlicher Pulsrahmenzähler (5) an die Synchronisierung angeschlossen ist, der von jedem empfangenen Rahmenkennungswort synchronisiert wird. Erst wenn die neue Phasenlage mit Hilfe des zusätzlichen Pulsrahmenzählers (5) erkannt ist, werden der Taktgenerator (6) und der Demultiplexer (22) nachsynchronisiert. Hierdurch werden unnütze Synchronisiervorgänge durch das Verstellen des Taktgenerators (6) und der damit verbundene Empfang fehlerhafter Zeichen vermieden.

FIG1

SIEMENS AKTIENGESELLSCHAFT
Berlin und München

Unser Zeichen:
VPA 82 P 1279 E

Synchronisiereinrichtung einer Digitalsignal-
Demultiplexeinrichtung

Die Erfindung betrifft eine Synchronisiereinrichtung einer Digitalsignal-Demultiplexeinrichtung mit einer einen Demultiplexer enthaltenden Empfangsschaltung, mit einer an die Empfangsschaltung angeschlossenen Erkennungsschaltung zur Identifizierung eines im empfangenen Multiplexsignal enthaltenen Rahmenkennungswortes und mit einer Synchronisierung, der das Ausgangssignal der Erkennungsschaltung zugeführt ist, zur Überwachung des Synchronismus und zur Steuerung des Demultiplexers und eines Taktgenerators.

Bei Digitalsignalmultiplexern werden sendeseitig mehrere ankommende Signale, auch Tributaries oder Kanäle genannt, bitweise zu einem Multiplexsignal zusammengefügt. Auf der Empfangsseite muß der ankommende Datenstrom, das Multiplexsignal, wieder durch bitweises Zerlegen in einem Demultiplexer auf mehrere Kanäle aufgeteilt werden. Bei höheren Übertragungsgeschwindigkeiten ist jeweils die Zusammenfassung bzw. Aufteilung von vier Kanälen üblich. Um empfangsseitig die richtige Zuordnung der Bits zu den beispielsweise vier Kanälen zu ermöglichen, wird sendeseitig in das Multiplexsignal zu Beginn jedes Pulsrahmens ein Rahmenkennungswort eingefügt. Auf der Empfangsseite wird dieses Rahmenkennungswort zur Synchronisierung des Demultiplexers verwendet. Da das erste Bit nach dem Rahmenkennungswort dem ersten Kanal, das zweite dem zweiten Kanal usw. zugeordnet ist, kann jetzt das ankommende Multiplexsignal richtig auf die Kanäle aufgeteilt wer-

P 1 Shy / 1.4.1982

den. Darüber hinaus ist es erforderlich, daß zwischen dem Taktgenerator der Empfangsseite und dem empfangenen Multiplexsignal Synchronismus herrscht. So ist es möglich, das Rahmenkennungswort und spezielle für Sonderzwecke verwendete Bits in dem an sich anonymen Datenstrom zu erkennen.

Im nichtsynchronen Zustand wird bei den bisher bekannten Synchronisiereinrichtungen beim erstmaligen Auffinden eines Rahmenkennungswortes ein Taktgenerator gesetzt, der nun die Zeitpunkte markiert, zu denen die weiteren Rahmenkennungswörter erwartet werden. Dieser Taktgenerator erzeugt alle Arbeitstakte, die zur Zerlegung und Auswertung des empfangenen Multiplexsignals benötigt werden. Eine derartige Demultiplex-Einrichtung ist in der DE-AS 28 56 565 beschrieben. Hier wird das empfangene Multiplexsignal in mehrere Schieberegister aufgeteilt, die mit einer niedrigeren Taktfrequenz als das Empfangsschieberegister arbeiten. Hierdurch wird erreicht, daß der größte Teil der Schaltung mit einer geringeren Arbeitsgeschwindigkeit auskommt. In der DE-OS 30 38 316 ist eine weitere Synchronisiereinrichtung beschrieben. Auch hier wird das empfangene Multiplexsignal in mehrere Schieberegister aufgeteilt, die mit einer niedrigeren Taktfrequenz als das Empfangsschieberegister arbeiten. Das Rahmenkennungswort wird viermal - entsprechend der vier möglichen Phasenlagen - von UND-Gattern, die an die Ausgänge der parallel arbeitenden Schieberegister angeschlossen sind, herausgegattert. Nach Erkennen der richtigen Phasenlage wird das bereits aufgeteilte Multiplexsignal über Multiplexer an die einzelnen Kanäle durchgeschaltet.

Diese Anordnungen haben generell folgenden Nachteil: Wird die Übertragung eines Multiplexsignals durch Bündelstörungen (bursts) gestört, können mehr als drei Rahmenkennungswörter verfälscht werden. Es wird dann ein Suchvorgang eingeleitet, bei dem - wie beschrieben - bei einem vorgetäuschten Rahmenkennungswort der Taktgenerator falsch gesetzt wird. Bis zur Beendigung des Synchronisiervorganges erfolgt daher eine falsche Zuordnung des Taktgenerators zum empfangenen Multiplexsignal. Die empfangenen Bits werden nicht korrekt zu Datenwörtern zusammengesetzt, die sendeseitig zusätzlich eingefügten Bits, z.B. Stopf- und Stopfkennbits, werden nicht richtig erkannt, und sämtliche Bits können darüber hinaus falsch auf die Kanäle aufgeteilt werden.

Erst nach beendeter Störung des Multiplexsignals wird durch die Sanchronisiereinrichtung der synchrone Zustand wieder hergestellt und ein störungsfreier Empfang möglich.

Aufgabe der Erfindung ist es, eine Synchronisiereinrichtung anzugeben, die bei Störungen des empfangenen Multiplexsignals den Synchronismus der Demultiplexeinrichtung beibehält und unnötige Synchroniservorgänge vermeidet.

Diese Aufgabe wird dadurch gelöst, daß ein zusätzlicher Pulsrahmenzähler an die Synchronisierung angeschlossen ist, der von jedem empfangenen Rahmenkennungswort synchronisiert wird, und daß die Synchronisierung so ausgebildet ist, daß der Taktgenerator und der Demultiplexer nur nach Empfang von mehreren aufeinanderfolgenden Rahmenkennungswörtern synchronisiert werden.

Bei Störungen des empfangenen Multiplexsignals oder bei Verlust des Synchronismus der Demultiplexeinrichtung wird über den zusätzlichen Pulsrahmenzähler versuchsweise ein Synchronisiervorgang durchgeführt. Dieser wird nur dann als erfolgreich angesehen, wenn das Rahmenkennungswort mehrmals hintereinander zum erwarteten Zeitpunkt empfangen wird. In diesem Fall wird der Demultiplexer und der Taktgenerator entsprechend synchronisiert. Kommt es dagegen nicht zum Empfang mehrerer aufeinanderfolgender Rahmenkennungswörter, so erfolgt auch kein unnützer Synchronisiervorgang. Bis zum Erkennen einer neuen Synchronlage bleibt die Arbeitsweise des Demultiplexers und des Taktgenerators unverändert.

Es ist zweckmäßig, daß die Synchronisierung eine Zählvorrichtung enthält, die nach mehrmaligem aufeinanderfolgenden Nichterkennen von Rahmenkennungswörtern zu den erwarteten Zeitpunkten den Zustand "Synchronverlust" signalisiert, und die nach mehrmaligem aufeinanderfolgenden Empfang der Rahmenkennungswörter zu den erwarteten Zeitpunkten einen Synchronisierungsimpuls an den Taktgenerator abgibt und den Zustand "Synchronismus" signalisiert.

Es ist möglich, eine einzige Zählvorrichtung zu verwenden. Bei Synchronismus wird von der Zählvorrichtung überprüft, ob in mehreren aufeinanderfolgenden Pulsrahmen Rahmenkennungswörter zu den erwarteten Zeitpunkten nicht oder nur verstümmelt auftreten; herrscht kein Synchronismus, werden die richtig erkannten Rahmenkennungswörter bewertet.

Es ist vorteilhaft, daß als Zählvorrichtung ein Schieberegister vorgesehen ist, daß an Kippstufenausgänge des Schieberegisters die Eingänge einer ersten Gatterschaltung angeschlossen sind, deren Ausgang mit einem ersten Eingang einer Synchron-Kippstufe verbunden ist und mehrere empfangene Rahmenkennungswörter signalisiert, daß die Kippstufenausgänge mit den Eingängen einer zweiten Gatterschaltung verbunden sind, deren Ausgang mehrere nicht

0091061

erkannte Rahmenkennungswörter signalisiert und mit einem
zweiten Eingang der Synchron-Kippstufe verbunden ist,
daß dem Takteingang des Schieberegisters eine von der
Synchron-Kippstufe gesteuerte Umschaltvorrichtung vorgeschaltet ist, die jeweils einen Synchronimpulsausgang
des zusätzlichen Pulsrahmenzählers oder einen Synchronimpulsausgang des Taktgenerators durchschaltet, und daß
der Dateneingang des Schieberegisters mit dem Ausgang
der Erkennungsschaltung verbunden ist.

Diese Schaltungsanordnung verwendet ein Schieberegister
als Zählvorrichtung. Die Synchron-Kippstufe gibt an,
ob Synchronismus oder Synchronverlust herrscht. Entsprechend werden vom Taktgenerator oder von dem zusätzlichen Pulsrahmenzähler zum vermeintlichen Zeitpunkt des
Empfangs eines Rahmenkennungswortes Synchronimpulse abgegeben, die das Schieberegister steuern.

Es ist zweckmäßig, daß die Synchronisierung eine erste
Zählvorrichtung enthält, die vom Taktgenerator gesteuert
wird und nach mehrmaligem aufeinanderfolgenden Nichterkennen von Rahmenkennungswörtern als Betriebszustand
Synchronverlust angibt, daß eine zweite Zählvorrichtung
vorgesehen ist, die vom zusätzlichen Pulsrahmenzähler
gesteuert wird und nach mehrmaligem aufeinanderfolgenden Empfang von Rahmenkennungswörtern einen synchronen
Betriebszustand angibt und einen Synchronisierimpuls
an den Taktgenerator abgibt.

Die Verwendung einer zweiten Zählvorrichtung verkürzt
die Synchronisierzeit bei Synchronverlust. Es muß nicht
erst abgewartet werden, bis der Betriebszustand Synchronverlust erkannt ist, sondern der Synchronisiervorgang
kann mit Hilfe des zusätzlichen Pulsrahmenzählers sofort einsetzen.

Weitere vorteilhafte Ausbildungen der Erfindung sind
in den übrigen Unteransprüchen angegeben.

Die Erfindung wird anhand von Ausführungsbeispielen und
Figuren näher erläutert.

Es zeigen

Fig. 1 ein Prinzipschaltbild der erfindungsgemäßen
Synchronisiereinrichtung,

Fig. 2 eine Variante der Synchronisiervorrichtung,

Fig. 3 eine Variante einer Empfangseinrichtung der
Synchronisierung,

Fig. 4 eine Zählvorrichtung einer verwendeten Synchronisierung,

Fig. 5 das Prinzipschaltbild eines zusätzlichen Pulsrahmenzählers und

Fig. 6 ein Zeitdiagramm zur Funktion des Pulsrahmenzählers.

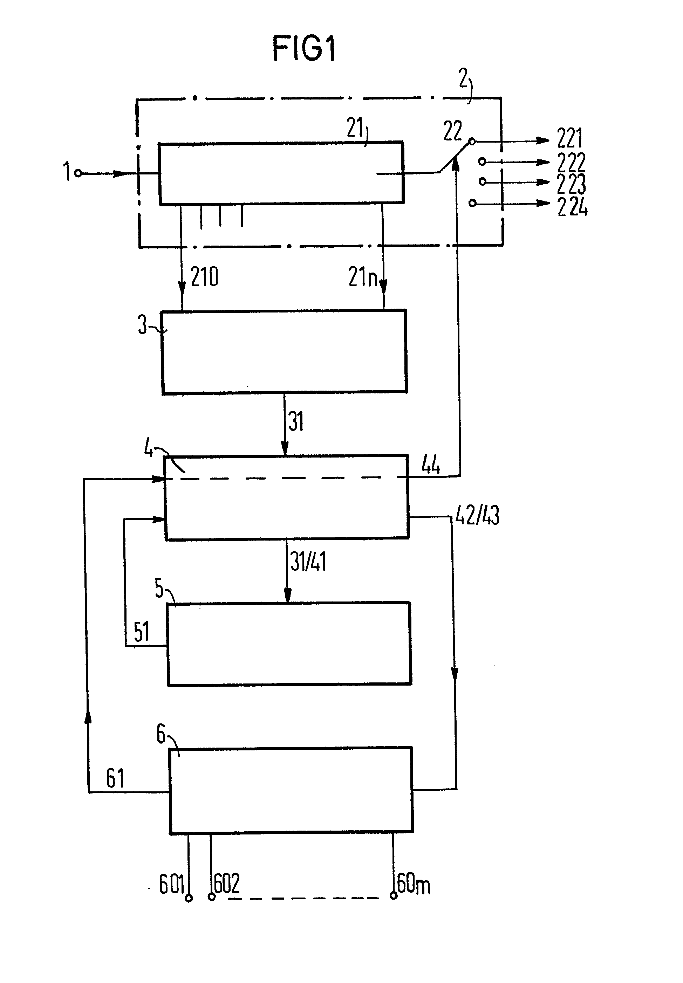

In Fig. 1 ist das Prinzipschaltbild der Synchronisiereinrichtung dargestellt. Am Eingang 1 liegt das empfangene Multiplexsignal an, es gelangt zu einer Empfangseinrichtung 2, die ein Schieberegister 21 und einen Demultiplexer 22 enthält. Der Demultiplexer sorgt für die
richtige Aufteilung des Multiplexsignals auf vier
Kanäle 221 bis 224. An die Ausgänge 210 bis 21n des
Schieberegisters 21 ist eine Erkennungsschaltung 3 für
das Rahmenkennungswort angeschlossen. Der Ausgang 31
der Erkennungsschaltung 3 ist mit einer Synchronisierung
4 verbunden. Ein erster Steuerausgang 44 der Synchronisierung 4 steuert den Demultiplexer 22, weitere Ausgänge 42/43 und 31/41 der Synchronisierung 4 synchronisieren einen Taktgenerator 6 bzw. einen zusätzlichen
Pulsrahmenzähler 5. Der Taktgenerator weist Taktausgänge 601 bis 60m auf, an denen Arbeitstakte für die Demultiplexeinrichtung anliegen. Ein Synchonimpulsausgang 61 des Taktgenerators ist mit einem zweiten Eingang der Synchronisierung 4 verbunden. Der zusätzliche Pulsrahmenzähler 5 weist ebenfalls einen Synchronimpulsausgang 51 auf, der mit einem dritten Eingang der mit einem dritten Eingang der Synchronisierung 4 verbunden ist.

Zunächst soll die Funktion der Synchronisiereinrichtung kurz erläutert werden. Das empfangene Multiplexsignal gelangt zunächst in das Schieberegister 21 der Empfangseinrichtung 2. Der Demultiplexer 22 sorgt für die richtige Verteilung der empfangenen Daten auf die vier Kanäle 221 bis 224. Die Erkennungsschaltung 3 besteht aus einem Gatternetzwerk, das bei Empfang eines Rahmenkennungswortes an seinem Ausgang 31 einen Impuls abgibt. Beim Betriebszustand Synchronverlust synchronisiert das empfangene Rahmenkennungswort den zusätzlichen Pulsrahmenzähler 5, dessen Zähldauer exakt einem Multiplex-Pulsrahmen entspricht. Der Pulsrahmenzähler 5 gibt jeweils nach genau einer Pulsrahmendauer einen Synchronimpuls an seinem Synchronimpulsausgang 51 zu dem Zeitpunkt ab, zu dem ein weiteres Rahmenkennungswort erwartet wird. Ist ein drittes Rahmenkennungswort zeitrichtig empfangen worden, so werden von der Synchronisierung 4 der Demultiplexer 22 und der Taktgenerator 6 synchronisiert. Der Taktgenerator 6 wird hierzu in eine bestimmte Zählstellung geschaltet. Die Synchronisierung 4 übernimmt die Zählung von nicht erkannten Rahmenkennungswörtern und von richtig empfangenen Rahmenkennungswörtern. Die Auswertung erfolgt bei Synchronismus durch den Synchronimpuls des Taktgenerators 6; fehlt dagegen der Synchronismus, erfolgt die Auswertung der nicht erkannten Rahmenkennungswörter durch die Synchronimpulse des zusätzlichen Pulsrahmenzählers 5. Im störungsfreien Synchronfall stimmen beide Synchronimpulse überein.

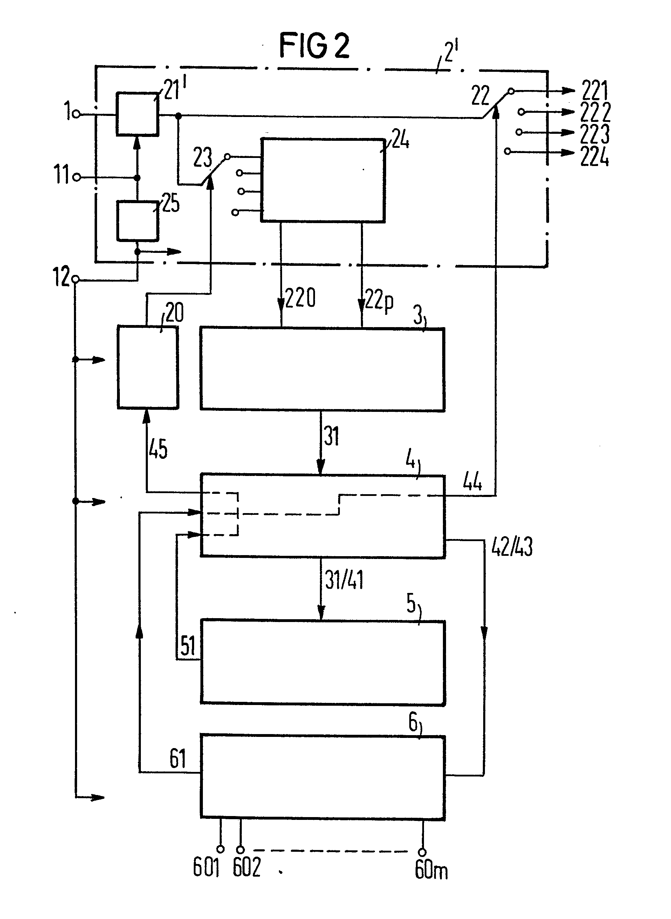

In Fig. 2 ist eine Variante der Synchronisiereinrichtung dargestellt. Bei höheren Übertragungsgeschwindigkeiten des Multiplexsignals ist es bekannt, eine andere Empfangseinrichtung vorzusehen, bei der nur wenige Schaltungselemente für die höchste Geschwindigkeit ausgelegt sein müssen. Die dargestellte Variante der Empfangseinrichtung 2' enthält ein verkürztes Schieberegister 21', einen zweiten Demultiplexer 23 und einen Schieberegisterblock 24 von vier parallel arbeitenden Schieberegistern. Die Ausgänge dieser Schieberegister sind mit 220 bis 22p bezeichnet. Zusätzlich ist eine Kanalsynchronisierung 20 notwendig, die über die Synchronisierung 4 den zweiten Demultiplexer 23 steuert. Bei dieser Lösung ist es - wie bereits erwähnt - möglich, die Arbeitsgeschwindigkeit für die meisten Schaltungsteile herabzusetzen. Hierzu dient ein Frequenzteiler 25, der entsprechend der Anzahl der Kanäle den am Takteingang 11 anliegenden Eingangstakt durch vier teilt. Der Arbeitstakt am Ausgang 12 des Frequenzteilers 25 wird den übrigen Schaltungen zugeführt.

Die Arbeitsweise dieser Variante der Synchronisiereinrichtung ist in wesentlichen Teilen mit der in Fig. 1 dargestellten Synchronisiereinrichtung identisch. Für die Kanalsynchronisierung 20, die Erkennungsschaltung 3 und den Schieberegisterblock 24 sind viele Varianten denkbar. Hier wird angenommen, daß die Aufteilung des empfangenen Multiplexsignals in vier parallele Datenströme durch den zweiten Demultiplexer 23 erfolgt. Die Erkennungsschaltung 3 braucht wiederum nur das Rahmenkennungswort herauszugattern. Über die Kanalsynchronisierung 20 wird bei Verlust des Synchronismus der zweite Demultiplexer 23 solange verstellt, bis das gewünschte Rahmenkennungswort von der Erkennungsschaltung 31 empfangen wird. Erst danach erfolgt in der bereits beschriebenen Weise die Synchronisierung des Demultiplexers 22 und des Taktgenerators 6. Der zeitliche Zusammenhang zwischen dem Demultiplexer 22 und
dem Taktgenerator ist jeweils durch eine gestrichelte
Linie in der Synchronisierung 4 der Fig. 1 und Fig. 2
angedeutet.

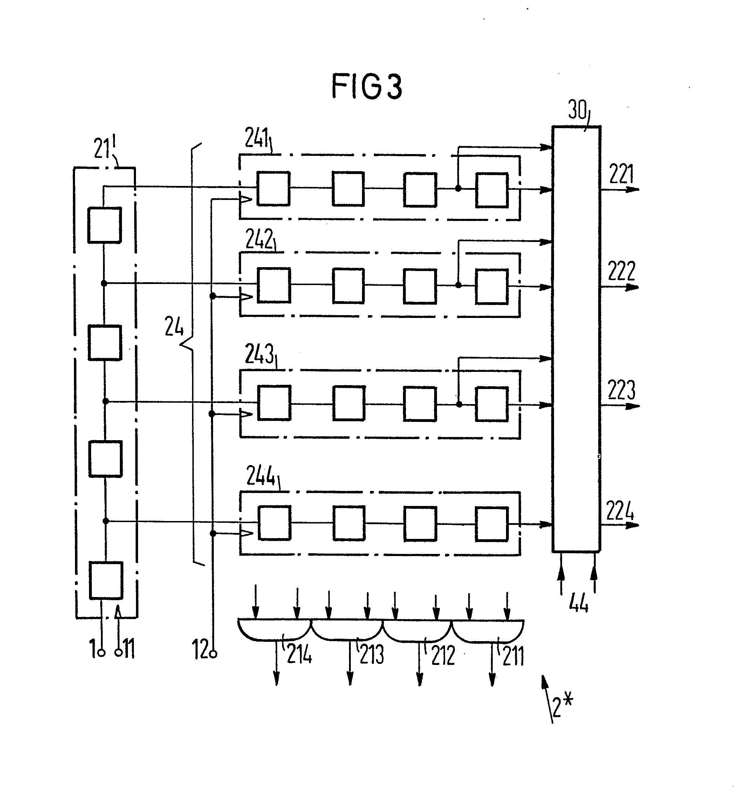

Eine andere Variante 2* der Empfangseinrichtung ist in
der Fig. 3 dargestellt. Das Empfangsschieberegister 21'
besteht aus vier Kippstufen. An jede dieser Kippstufen
ist jeweils ein weiteres Schieberegister 241 bis 244
mit jeweils vier Kippstufen angeschaltet. Dem Empfangsschieberegister 21' wird über den Takteingang 11 ein
dem Multiplexsignal entsprechender schneller Arbeitstakt zugeführt. Die Schieberegister 241 bis 244 arbeiten dagegen mit einem um den Faktor 4 langsameren
Arbeitstakt. Die Taktzuordnung bleibt unverändert.
Wegen der hierbei möglichen Freiheitsgrade ist das Rahmenkennungswort entsprechend der vier möglichen Phasenlagen viermal durch die Gatter 211 bis 214 herausgegattert. Die Synchronisierung 4 wertet die richtige
Phasenlage aus und ordnet über ihren Ausgang 44 über
eine Zuordnungseinrichtung 30 die Daten den richtigen
Kanälen 221 bis 224 zu. Die Zuordnungseinrichtung besteht hier aus üblichen Multiplexern. Die hier beschriebene Schaltungsanordnung entspricht im wesentlichen der
Schaltungsanordnung gemäß der DE-OS 30 38 360.

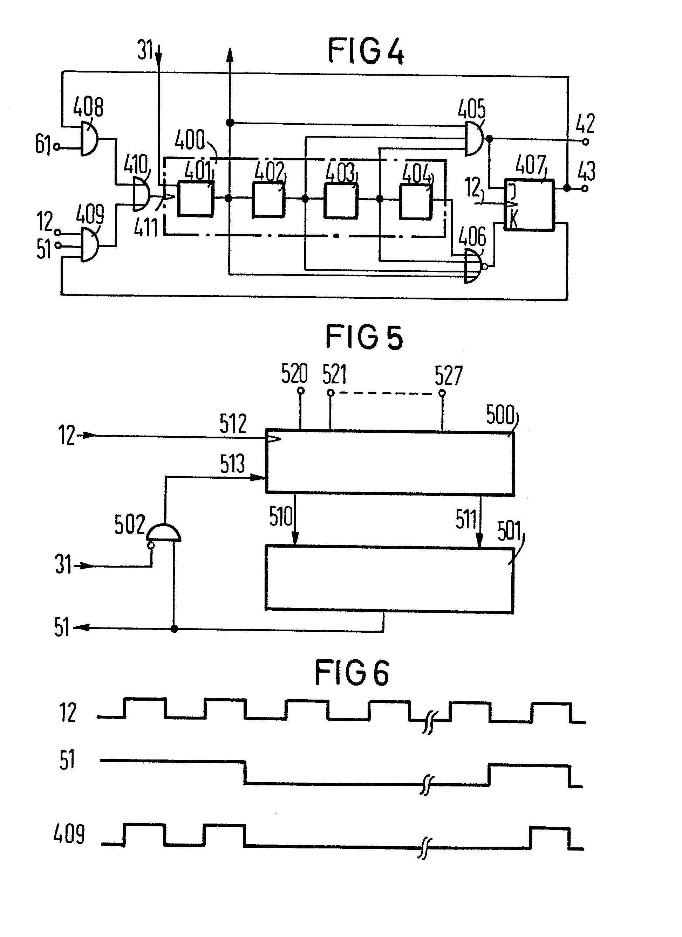

In Fig. 4 ist die Zähleinrichtung der Synchronisierung
dargestellt. Sie enthält ein aus vier Kippstufen 401
bis 404 bestehendes Schieberegister 400. Die Ausgänge
der ersten drei Kippstufen 401 bis 403 sind mit den
Eingängen einer ersten Gatterschaltung 405 verbunden,
deren Ausgang mit 42 bezeichnet ist. Der Ausgang des
Gatters 405 ist mit einem ersten Eingang J einer Synchron-Kippstufe 407 verbunden, deren Ausgang mit 43
bezeichnet ist. Die Ausgänge 401 bis 404 des Schieberegisters 400 sind mit einer zweiten Gatterschaltung
406 verbunden, deren Ausgang mit einem zweiten Eingang K der Synchron-Kippstufe 407 verbunden ist. Als
erste Gatterschaltung 405 wird ein UND-Gatter verwendet, als zweite Gatterschaltung 406 ein NOR-Gatter.
Der Dateneingang des Schieberegisters 400 ist mit dem
Ausgang 31 der Erkennungsschaltung 3 verbunden. Dem
Takteingang 411 des Schieberegisters 401 bis 404 ist
ein ODER-Gatter 410 vorgeschaltet, dessen Eingänge
mit einem zweiten UND-Gatter 408 und einem dritten
UND-Gatter 409 verbunden sind. Ein Eingang des UND-
Gatters 408 ist mit dem Ausgang 43 der Synchron-
Kippstufe 407 verbunden; der zweite Eingang dieses
UND-Gatters ist mit dem Synchronimpulsausgang 61 des
Taktgenerators 6 verbunden. Das dritte UND-Gatter 409
besitzt drei Eingänge. Der erste Eingang ist mit dem
invertierenden Ausgang der Synchron-Kippstufe 407 verbunden, der zweite Eingang ist mit dem Synchronimpulsausgang 51 des Pulsrahmenzählers 5 verbunden und der
dritte Eingang 12 ist mit dem Ausgang des Frequenzteilers 25 verbunden, der auch an den Takteingang der
Synchronkippstufe 407 angeschaltet ist.

Bei Synchronismusverlust werden mit dem Synchronimpuls des Taktgenerators 6 nicht erkannte Rahmenkennungswörter als logische Nullen in das Schieberegister
400 eingeschrieben und durch das NOR-Gatter 406 ausgewertet. Hierdurch wird bei vier aufeinanderfolgenden
fehlenden oder verstümmelten Rahmenkennungswörtern
die Synchron-Kippstufe 407 rückgestellt und hierdurch
dem Schieberegister 400 zunächst der Arbeitstakt und
nach dem ersten erkannten Rahmenkennungswort der mit
dem Arbeitstakt verknüpfte Synchronimpuls des Pulsrahmenzählers 51 über das Gatter 409 zugeführt. Bei drei
richtig empfangenen Rahmenkennungswörtern wird die
Synchron-Kippstufe 407 über das UND-Gatter 405 wieder
eingestellt und der Taktgenerator 6 nachsynchronisiert.

Die Funktion des Pulsrahmenzählers 5 wird anhand des
Prinzipschaltbildes ·Fig. 5 und des dazugehörigen Zeitdiagramms Fig. 6 näher erläutert. Der Pulsrahmenzähler 6 besteht im wesentlichen aus einem Binärzähler 500,
dessen Zähldauer exakt dem Multiplex-Pulsrahmen entspricht. Wird eine Synchronisiereinrichtung entsprechend
Fig. 2 verwendet, so ist natürlich auch der Faktor des
Frequenzteilers 25 zu berücksichtigen. Der Binärzähler 500 weist Programmiereingänge 520 bis 527 auf, mit
deren Hilfe er in eine beliebige Stellung gesetzt werden kann. Diese Stellung ist durch eine weitere Gatterschaltung 501 herausgegattert. Die Gatterschaltung 501 ist hierzu mit den Ausgängen 510 und 511 des
Binärzählers verbunden. Der Binärzähler weist einen
Setz-Eingang 513 (set enable) auf, der synchron mit
dem Arbeitstakt am Takteingang 512 wirksam wird. Der
Ausgang der weiteren Gatterschaltung 501 ist über ein
UND-Gatter 502 auf den Setz-Eingang 513 geführt. Das
UND-Gatter 502 weist einen invertierenden zweiten
Eingang auf, der an den Ausgang 31 der Erkennungsschaltung angeschlossen ist. Erreicht der Binärzähler
seine Synchronimpuls-Zählstellung, so wird von der
weiteren Gatterschaltung 501 eine logische 1 abgegeben.
Fehlt jetzt am Ausgang 31 der Erkennungsschaltung 3
eine logische 1, da ein Rahmenkennungswort nicht empfangen wurde, so liegt am Ausgang des UND-Gatters 502
die logische 1 an. Der Binärzähler wird somit mit dem
nächsten Arbeitstakt in seine Synchronimpuls-Zählstellung gesetzt bzw. in dieser Zählstellung festgehalten. Liegt dagegen am Ausgang 31 der Erkennungsschaltung 3 eine logische 1 an, so bleibt der Rücksetzeingang 513 des Binärzählers 500 auf der logischen 0 und der Zähler gelangt mit dem nächsten Arbeitstakt in seine nächste Zählstellung.

Dies ist im Zeitdiagramm Fig. 6 nochmals dargestellt.
Bei Synchronverlust liegen zunächst ständig Arbeitstakte am Eingang des Schieberegisters 400. Dies wird
erreicht, indem mit dem Ausgang 51 der Gatterschaltung 501 nochmals eine UND-Verknüpfung mit dem Arbeitstakt 12 durchgeführt wird. Wird nun ein Rahmenkennungswort von der Erkennungsschaltung 3 abgegeben,
so wird die Kippstufe 401 eingestellt und der Binärzähler 500 gelangt in seine nächste Zählstellung.
Hierdurch wird von seinem weiteren Gatter 501 die
logische Null abgegeben und der nächste Arbeitstakt
für das Schieberegister 401 bis 404 erscheint erst
nach der Dauer eines Pulsrahmens.

Der Binärzähler des Taktgenerators kann grundsätzlich
in ähnlicher Weise gesteuert werden. Je nach verwendeter Schaltungstechnik sind jedoch auch andere Möglichkeiten der Synchronisierung denkbar. Wie prinzipiell angedeutet, kann zur Einstellung des Binärzählers der Ausgang 42 der ersten Gatterschaltung 405
zusammen mit dem Ausgang 43 der Synchron-Kippstufe
407 verwendet werden. Die Einstellung erfolgt während
des Zeitbereiches, in dem der Ausgang 42 der Gatterschaltung 405 bereits auf der logischen 1 ist, sich
der Ausgang 43 der Synchron-Kippstufe 407 jedoch noch
auf der logischen 0 befindet.

8 Patentansprüche
6 Figuren

0091061

Patentansprüche

1. Synchronisiereinrichtung einer Digitalsignal-Demultiplexeinrichtung mit einer einen Demultiplexer (22) enthaltenden Empfangsschaltung (2), mit einer an die Empfangsschaltung (2) angeschlossenen Erkennungsschaltung (3) zur Identifizierung eines im empfange-nen Multiplexsignals enthaltenen Rahmenkennungswor-tes und mit einer Synchronisierung (4), der das Ausgangssignal der Erkennungsschaltung (3) zugeführt ist, zur Überwachung des Synchronismus und zur Steuerung des Demultiplexers (22) und eines Taktgenerators (6), d a d u r c h   g e k e n n z e i c h n e t , daß ein zusätzlicher Pulsrahmenzähler (5) an die Synchronisierung (4) angeschlossen ist, der von jedem empfangenen Rahmenkennungswort synchronisiert wird, und daß die Synchronisierung (4) so ausgebildet ist, daß der Taktgenerator (6) und der Demultiplexer (22) nur nach Empfang von mehreren aufeinanderfolgenden Rahmenkennungswörtern synchronisiert werden.

2. Synchronisiereinrichtung nach Anspruch 1, d a -d u r c h   g e k e n n z e i c h n e t , daß die Synchronisierung (4) eine Zählvorrichtung enthält, die nach mehrmaligem aufeinanderfolgenden Nichterkennen von Rahmenkennungswörtern zu den erwarteten Zeitpunkten den Zustand "Synchronverlust" signalisiert und die nach mehrmaligem aufeinanderfolgenden Empfang der Rahmenkennungswörter zu den erwarteten Zeitpunkten einen Synchronisierungsimpuls an den Taktgenerator (6) abgibt und den Zustand "Synchronismus" signalisiert.

3. Synchronisiereinrichtung nach Anspruch 2, d a -d u r c h   g e k e n n z e i c h n e t , daß als Zählvorrichtung ein Schieberegister (400) vorgesehen ist, daß an Kippstufenausgänge (401 - 403) des Schieberegisters (400) die Eingänge einer ersten Gatterschaltung (405) angeschlossen sind, deren Ausgang mit einem
ersten Eingang (J) einer Synchron-Kippstufe (407) verbunden ist und mehrere empfangene Rahmenkennungswörter
signalisiert, daß die Kippstufenausgänge (401 - 404) mit
den Eingängen einer zweiten Gatterschaltung (406) verbunden sind, deren Ausgang mehrere nicht erkannte Rahmenkennungswörter signalisiert und mit einem zweiten
Eingang (K) der Synchron-Kippstufe (407) verbunden ist,
daß dem Takteingang des Schieberegisters (400) eine
von der Synchron-Kippstufe gesteuerte Umschaltvorrichtung (408, 409, 410) vorgeschaltet ist, die jeweils
einen Synchronimpulsausgang (51) des zusätzlichen Pulsrahmenzählers (5) oder einen Synchronimpulsausgang (61)
des Taktgenerators (6) durchschaltet, und daß der Dateneingang des Schieberegisters (400) mit dem Ausgang (31)
der Erkennungsschaltung (3) verbunden ist.

4. Synchronisiereinrichtung nach Anspruch 1, d a -
d u r c h   g e k e n n z e i c h n e t , daß die Synchronisierung (4) eine erste Zählvorrichtung enthält,
die vom Taktgenerator (6) gesteuert wird und nach mehrmaligem aufeinanderfolgenden Nichterkennen von Rahmenkennungswörtern als Betriebszustand Synchronverlust
angibt, daß eine zweite Zählvorrichtung vorgesehen ist,
die vom zusätzlichen Pulsrahmenzähler (5) gesteuert
wird und nach mehrmaligem aufeinanderfolgenden Empfang
von Rahmenkennungswörtern einen synchronen Betriebszustand angibt und einen Synchronisierimpuls an den Taktgenerator (6) abgibt.

5. Synchronisiereinrichtung nach einem der vorhergehenden Ansprüche, d a d u r c h   g e k e n n -
z e i c h n e t , daß der Pulsrahmenzähler (5) einen
synchronen Setzeingang aufweist.

0091061

82 P 1279 E

6. Synchronisiereinrichtung nach Anspruch 5, d a - d u r c h  g e k e n n z e i c h n e t , daß der Pulsrahmenzähler (5) in die Zählstellung gesetzt wird, in der er einen Synchronimpuls abgibt.

7. Synchronisiereinrichtung nach einem der vorhergehenden Ansprüche, d a d u r c h  g e k e n n - z e i c h n e t , daß als Taktgenerator ein Binärzähler mit synchronem Rücksetzeingang vorgesehen ist.

8. Synchronisiereinrichtung nach einem der vorhergehenden Ansprüche, d a d u r c h  g e k e n n - z e i c h n e t , daß sie in integrierter Schaltungstechnik aufgebaut ist.

1/4

FIG1

FIG 2

## FIG 3

## FIG 4

## FIG 5

## FIG 6